# EUROPEAN PATENT SPECIFICATION

(11) **EP 0 721 091 B1**
(45) Date of publication and mention of the grant of the patent: **08.03.2000**
(21) Application number: 95308448.0
(22) Date of filing: 24.11.1995
(51) Int. Cl.: F24H 9/20, G05D 23/22

(54) **Gas heater**
Gaserhitzer
Réchauffeur de gaz

(30) Priority: 06.01.1995 GB 9500254
(43) Date of publication of application: 10.07.1996
(73) Proprietor: The BOC Group plc, Windlesham Surrey GU20 6HJ (GB)
(72) Inventor: King, Brian, Godalming, Surrey, GU7 3EA (GB)
(74) Representative: Gough, Peter

(56) References cited:
- DE-A- 3 703 468
- DE-C- 576 545

## Description

The present invention relates to a gas heater, as see DE-A-3703468, and relates particularly, but not exclusively, to such a heater for heating gas used in the manufacture of sand moulds or cores for metal casting.

Sand moulds for metal casting are generally manufactured from foundry sand, a resin binder and a curing agent. These components, when mixed together, form a composition which can be moulded into the desired shape and then 'cured' to form a strong mould which may be handled without damage. Curing can take place in air or, depending upon the components used, can be achieved by exposing the mould to a heated non-volatile gas such as, for example, carbon dioxide. Presently known apparatus for heating the gas during curing include what is known as a 'sirocco' heater. Such a heater is generally positioned some distance away from the mould and acts to heat all the gas being supplied to the mould. Little, if any, temperature control is possible, especially if the section of gas pipe between the heater and the mould is exposed to fluctuations in temperature. For some compositions, lack of adequate temperature control can be a distinct problem resulting in under or over cured moulds which fail to meet the desired strength characteristics.

It is an object of the present invention to provide a gas heater for use in mould curing which reduces and possibly eliminates the above mentioned problems.

Accordingly, the present invention provides a gas heater for heating gas in the manufacture of moulds or cores for metal casting in which said heater comprises a chamber having an inlet for receiving said gas and an outlet for expelling said gas, a heater element within the chamber for heating gas passing through said chamber and control means for varying the heat output of said heater thereby to maintain the temperature of the gas at a desired point downstream within a predetermined temperature range, characterised in that the control means comprises a first thermocouple for sensing the temperature of gas exiting the chamber, a first temperature controller being configured for conduction of electrical current from a source thereof only when the temperature detected by the first thermocouple is below a pre-determined value, a second thermocouple for sensing the temperature of the heater element, and a second temperature controller configured for allowing current to pass from said first controller to said heater element only when the temperature of said heater element is below a pre-determined value.

Advantageously, said first thermocouple is configured for sending an electrical signal indicative of the monitored temperature to said controller and in which said first controller is configured to implement a proportional - integral - derivative control cycle over said first thermocouple.

In an equally advantageous arrangement said second thermocouple is configured for sending an electrical signal indicative of the monitored temperature to the second controller and in which said second controller is configured to implement a proportional - integral - derivative control cycle over said second thermocouple.

Conveniently, said outlet is configured for directing heated gas to a sand mould or core and said first thermocouple is positioned immediately adjacent said mould or core.

Preferably the heater includes flow control means for controlling the flow of gas through said chamber.

Advantageously, the heater may further include a by-pass duct for causing at least a portion of said gas to by-pass the chamber.

Conveniently, the flow control means may include directing means for directing at least a portion of said gas to said by-pass duct as and when required.

The present invention will now be more particularly described by way of example only with reference to the accompanying drawings, in which:
Figure 1 is a schematic representation of a gas supply apparatus incorporating a gas heater in accordance with the present invention;
Figure 2 is a diagrammatic representation of a first form of gas heater; and
Figure 3 is a diagrammatic representation of a modified heater; and
Figure 4 is a graph of heater element temperature against time.

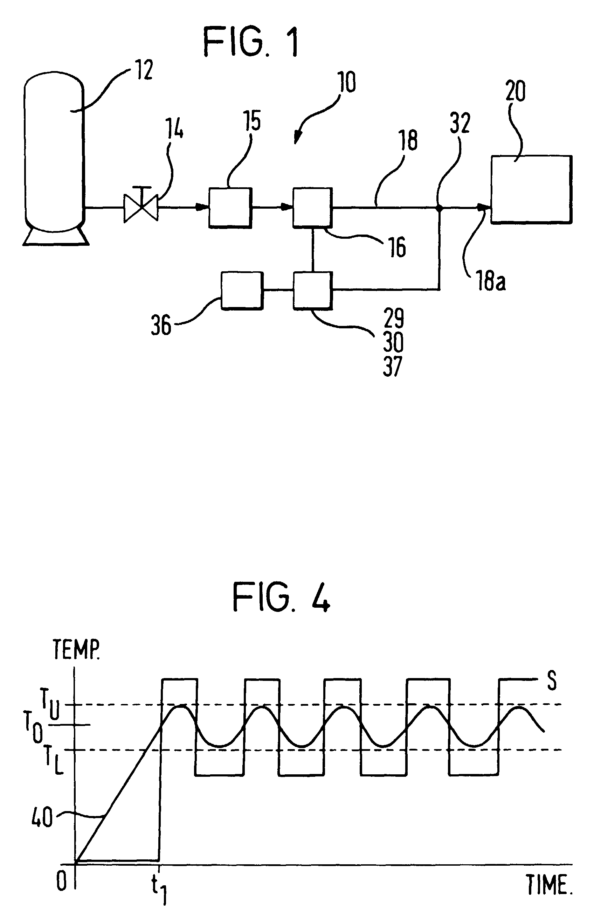

Referring now briefly to Figure 1, a gas supply apparatus 10 includes, for example, a source of liquid gas 12, control means 14, a vaporiser 15 for vaporising the liquid gas and a heater 16. A comparatively short length of gas supply pipe 18 conveys heated gas to a sand mould or core represented by box 20. Whilst the method of curing the mould or core forms no part of the present invention and is therefore not described in detail herein, it will be appreciated that the heated gas is passed over, and where appropriate through, the mould/core and acts to cure or harden the composition from which is made. The type of gas may vary depending upon the composition and may in some circumstances comprise air, nitrogen or carbon dioxide. For certain advanced foundry sand compositions, such as for example, that disclosed in GB 2154593 to FOSECO INT LIMITED, the temperature at which the gas reaches the mould/core can have a significant impact on the final strength thereof. Presently known heaters are generally positioned some considerable distance from the mould/core and the heated gas tends to cool rapidly as it passes along the long supply pipe. Cooling is a particular problem if the supply pipe is exposed to climatic temperature variations as is often the case in a large foundry.

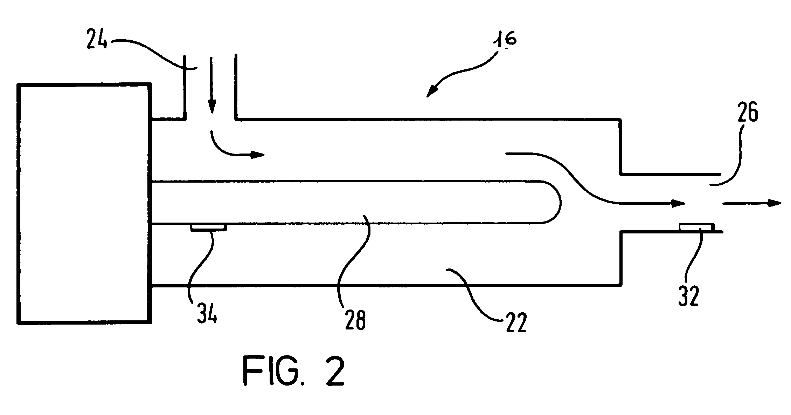

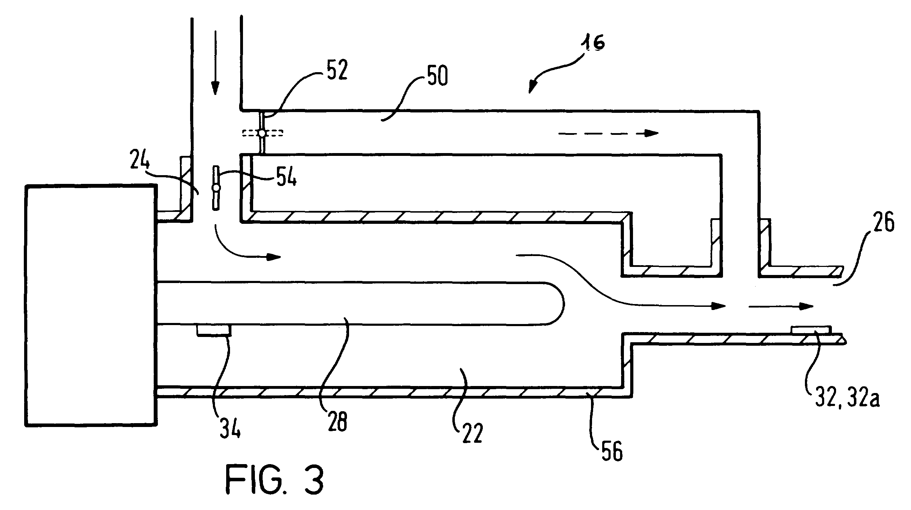

The heater 16 of the present invention is best illustrated in Figures 2 and 3 from which it will be appreciated that it comprises a chamber 22 having a longitudinally displaced inlet and outlet 24, 26 respectively and a heater element 28 positioned generally centrally therein. The inlet 24 acts to receive comparatively cool gas from the source thereof and directs it over the heater element 28 for heating thereby. Outlet 26 is positioned for receiving heated gas and directing it towards supply pipe 18. The heater 16 is provided with a control means 29 (shown schematically in Figure 1) for varying the heat output of said heater thereby to maintain the temperature of the gas at a desired point downstream within a given temperature range.

In its simplest form the control means 29 comprises a switch in the form of a first thermocouple 32 for sensing the temperature of the gas at a point downstream of the heater 16 and a second thermocouple 34 for sensing the temperature of the heater element 28. The first thermocouple is connected to temperature controller 30 and is configured for the conduction of electrical current from a source thereof 36 only when the detected temperature is below a pre-determined value, whilst the second thermocouple 34 is connected to another temperature controller 37 for allowing current to pass from said first temperature controller 30 to said heater element 28 only when the temperature detected by both thermocouples is below a pre-determined value. The temperature profile of the heater element is illustrated in Figure 4 from which it will be appreciated that, when both controllers are in their current passing mode the heater element 28 will heat up rapidly over a period of time t₁ as shown by line 40 until it passes above a desired operating temperature T_{O} at which point the second controller 37 will switch off and prevent any current being supplied to the heater element 28 even if the first controller 30 is 'on'. Whilst the temperature of the heater element 28 will continue to rise for a short period of time, it will eventually start to fall until it drops below T_{O} at which point controller 37 will start to conduct electricity once again and cause the heater element to heat up until its temperature once again reaches T_{O} and the current supply is once again switched off. The switching profile of the second temperature controller 37 is illustrated by line S from which it will be appreciated that whenever line S is below T_{O} then the second switch will be conducting (on) and whenever the line is above T_{O} it will prevent current being conducted therethrough (off). The upper and lower temperatures T_{U} and T_{L} respectively are, in this particular arrangement, effectively set by the natural hysteresis of the heater element and control circuitry. Such hysteresis can result in the heater element 28 being operated over a temperature range (T_{U} - T_{L}) somewhat wider than that which would be desired. Such wide variations in the heater temperature can have a knock-on effect on the temperature of the gas leaving the chamber 22 which itself varies more widely than might be desirable. Also, first controller 30 will have its own hysteresis and, on operation, might turn 'off at say one degree above a selected operating temperature and 'on' two degrees below said selected temperature. This hysteresis combined with the inertia of heater element 28 will result in the temperature of the gas exiting the chamber 22 being somewhat more varied than might be desired.

A further aspect of the present invention provides an extra degree of control over the heater and this lends itself particularly well to applications where it is desirable to maintain the temperature of the gas within a particularly close temperature band.

In the preferred arrangement of the present invention, first controller 30 includes a thermocouple 32a element which is configured for sending an electrical signal indicative of the monitored temperature T_{M} to controller 30 which is itself modified so as to implement what is commonly known as a Proportional - Integral - Derivative (PID) form of control cycle over said switch. Such control is well known to those skilled in the art and effectively acts to predict variations in output temperature and initiates control over the controller in accordance with said predictions so as to cause said controller to be turned on or off at an earlier stage than would occur if the controller was operated in on-off mode. For example, a controller set to conduct current whenever a detected temperature is at or below say 30°C will typically remain conducting up to 31°C and, once turned off, might not be switched back on until the temperature is actually 28°C. PID control effectively operates to ensure the switch is turned on and off at temperatures much closer to the desired operation temperature. For example, a temperature controller capable of operating between +20°C and +40°C and therefore having an operating temperature range of 20°C is selected to be turned on/off at extremes within 2% of the operational temperature range of the controller. Hence, a controller designed or set to operate at 30°C is controlled to operate within 2% either side thereof, ie. above 29.6°C and below 30.4°C.

The control system effectively monitors the actual temperature detected by the thermocouple and, after recording a number of temperatures, performs an integration thereon so as to derive a 'predicted' temperature. If this 'predicted' temperature is out or beyond the desired operating temperatures (29.6°C to 30.4°C, for example) then the controller initiates operation of the switch to cause current to flow or stop as the case may require in advance of the actual temperature reaching the control temperatures. In effect, the controller acts to smooth out the natural hysteresis of the switch and maintain the switching temperature much closer to that desired than is achievable under normal operation.

Whilst the above will obviously have a significant benefit on the performance of the overall heater system, it will be appreciated that still further control may be achieved by applying PID control to the heater element as well. Such control would act in very much the same manner as described above and effectively acts to maintain the actual operating temperature of the heater very much closer to the desired operating temperature than is achievable under normal control parameters. For example, assuming a desired heater temperature of +60°C, one could set control temperatures at 2% either side thereof, ie at 61.2°C and 58.8°C and the control system set to monitor the actual temperatures over a period of time, integrate the results so as to provide a prediction of future temperature and initiate control over the switch in the event of said predicted temperature equals or exceeds said control temperatures. In effect, the heater would be turned on/off in advance of its normal switching point thereby to smooth out the peaks and troughs of the normal cyclical temperature variation. It will be appreciated that the actual temperature thereof remains much closer to the desired operating temperature than is achievable under normal control parameters.

It will be further appreciated that, when both switches are subjected to PID control, the temperature of the gas as it passes through the supply pipe will be much more closely controlled than previously thought possible, each switch effectively acting in a more stable manner than previously possible.

Clearly, the closer the first controller 30 is to the actual point of use of the gas the better. Hence, if the first controller 30 is placed at the outlet 18a of the supply pipe 18 then changes in gas temperature as it travels along pipe 18 will be accommodated by the control system which thereby ensures gas is delivered to the point of use at the most advantageous temperature.

Further control features may include a by-pass duct 50 and valve means 52, 54 for ensuring at least a portion of the comparatively cool incoming gas is directed past the heater 28 and directly into supply pipe 18. This arrangement is best illustrated in Figure 3 from which it will be appreciated that valve means 52, 54 may be operated in any one of a number of ways. For example, valve 52 could be closed whilst valve 54 is fully open, thereby causing all the gas to be directed past the heater for heating thereby. Alternatively, both valves may be opened and thus part of the gas will be heated and part passed to the outlet without heating. Clearly, the control system may be adapted to select one or other gas flow paths as and when desired so as to maintain the output temperature of the gas as close as possible to that desired.

The provision of thermal insulation 56 around the heater 16 and supply pipe 18 acts to increase further the accuracy of temperature control. For example, a fully insulated system incorporating the above mentioned control parameters can control the gas supply temperature to within ± 0.5°C of the desired temperature.

## Claims

1. A gas heater (16) for heating gas in the manufacture of moulds or cores for metal casting, the heater comprising a chamber (22) having an inlet (24) for receiving said gas and an outlet (26) for expelling said gas, a heater element (28) within the chamber (22) for heating gas passing through said chamber (22) and control means (29) for varying the heat output of said heater element (28) thereby to maintain the temperature of the gas at a desired point downstream within a predetermined temperature range, characterised in that said control means comprises a first thermocouple (32) for sensing the temperature of gas exiting the chamber (22), a first temperature controller (30) being configured for conduction of electrical current from a source thereof (36) only when the temperature detected by the first thermocouple (32) is below a pre-determined value, a second thermocouple (34) for sensing the temperature of the heater element (28), and a second temperature controller (37) configured for allowing current to pass from said first controller (30) to said heater element (28) only when the temperature of said heater element (28) is below a pre-determined value.

2. A heater (16) as claimed in Claim 1 characterised in that said first thermocouple (32) is configured for sending an electrical signal indicative of the monitored temperature to said controller (30) and in which said first controller (30) is configured to implement a proportional - integral - derivative control cycle over said first thermocouple (32).

3. A heater (16) as claimed in Claims 1 or 2 characterised in that said second thermocouple (34) is configured for sending an electrical signal indicative of the monitored temperature to the second controller (37) and in which said second controller (37) is configured to implement a proportional - integral - derivative control cycle over said second thermocouple (34).

4. A heater (16) as claimed in any one of Claims 1 to 3 characterised in that said outlet (26) is configured for directing heated gas to a sand mould or core (20) and said first thermocouple (32) is positioned immediately adjacent said mould or core (20).

5. A heater (16) as claimed in any one of the previous claims characterised by flow control means (54) for controlling the flow of gas through said chamber (22).

6. A heater (16) as claimed in any one of the previous claims characterised by a by-pass duct (50) for causing at least a portion of said gas to by-pass the chamber (22).

7. A heater (16) as claimed in Claim 6 in which the flow control means includes directing means (52) for directing at least a portion of said gas to said by-pass duct (50) as and when required.

## Patentansprüche

1. Gasheizgerät (16) zum Beheizen von Gas bei der Herstellung von Formen oder Kernen für den Metallguß, wobei das Heizgerät eine Kammer (22) mit einem Einlaß (24) zur Aufnahme des Gases und einem Auslaß (26) für den Austritt des Gases, weiter ein Heizelement (28) innerhalb der Kammer (22) zum Beheizen von durch die Kammer (22) hindurchpassierendem Gas, und Steuermittel (29) zum Verändern des Wärmeausgangs des Heizelements (28) aufweist, um die Temperatur des Gases an einem gewünschten stromabwärtigen Punkt innerhalb eines vorgegebenen Temperaturbereiches zu halten, dadurch gekennzeichnet, daß die Steuermittel ein erstes Thermoelement (32) zum Erfassen der Temperatur des die Kammer (22) verlassenden Gases, einen ersten Temperaturregler (30), der für das Leiten von elektrischem Strom von einer Stromquelle (36) nur dann konfiguriert ist, wenn die vom ersten Thermoelement (32) erfaßte Temperatur unterhalb eines vorgegebenen Werts liegt, ein zweites Thermoelement (34) zum Erfassen der Temperatur des Heizelements (28), und einen zweiten Temperaturregler (37) aufweisen, der so konfiguriert ist, daß er einen Strom vom ersten Regler (30) zum Heizelement (28) nur dann fließen läßt, wenn die Temperatur des Heizelements (28) unterhalb eines vorgegebenen Werts liegt.

2. Heizgerät (16) nach Anspruch 1, dadurch gekennzeichnet, daß das erste Thermoelement (32) so konfiguriert ist, daß es ein die überwachte Temperatur anzeigendes elektrisches Signal zum Regler (30) sendet, und wobei der erste Regler (30) so konfiguriert ist, daß er über dem ersten Thermoelement (32) einen Proportional-Integral-Regelzyklus ausführt.

3. Heizgerät (16) nach Anspruch 1 oder 2, dadurch gekennzeichnet, daß das zweite Thermoelement (34) dafür konfiguriert ist, daß es ein die überwachte Temperatur anzeigendes elektrisches Signal zum zweiten Regler (37) sendet, und daß der zweite Regler (37) so konfiguriert ist, daß er über den zweiten Thermoelement (34) einen Proportional-Integral-Regelzyklus auführt.

4. Heizgerät (16) nach einem der Ansprüche 1 bis 3, dadurch gekennzeichnet, daß der Auslaß (26) so konfiguriert ist, daß er erwärmtes Gas in eine Sandform oder einen Sandkern (20) leitet, und daß das erste Thermoelement (32) unmittelbar angrenzend an die Form oder den Kern (20) positioniert ist.

5. Heizgerät (16) nach einem der vorhergehenden Ansprüche, gekennzeichnet durch Strömungssteuermittel (54) zur Steuerung der Gasströmung durch die Kammer (22).

6. Heizgerät (16) nach einem der vorhergehenden Ansprüche, gekennzeichnet durch einen Umgehungskanal (50), der mindestens einen Teil des Gases die Kammer (22) umgehen läßt.

7. Heizgerät (16) nach Anspruch 6, wobei die Strömungssteuermittel Leitungsmittel (52) aufweisen, die mindestens einen Teil des Gases nach Bedarf in den Umgehungskanal (50) leiten.

## Revendications

1. Réchauffeur de gaz (16) pour réchauffer un gaz lors de la fabrication de moules ou de noyaux pour la coulée de métaux, le réchauffeur comprenant une chambre (22) ayant une entrée (24) pour recevoir ledit gaz et une sortie (26) pour évacuer ledit gaz, un élément réchauffeur (28) à l'intérieur de la chambre (22) pour réchauffer le gaz traversant ladite chambre (22) et des moyens de régulation (29) pour modifier le débit calorifique dudit élément réchauffeur (28), ceci afin de maintenir dans une plage de températures prédéterminée la température du gaz en un point désiré en aval, ***caractérisé en ce que*** lesdits moyens de régulation comprennent un premier thermocouple (32) destiné à mesurer la température du gaz sortant de la chambre (22), un premier régulateur de température (30) configuré pour la conduction de courant électrique à partir d'une source (36) de celui-ci uniquement lorsque la température détectée par le premier thermocouple (32) est inférieure à une valeur prédéterminée, un second thermocouple (34) destiné à mesurer la température de l'élément réchauffeur (28) et un second régulateur de température (37) configuré pour n'autoriser le courant à passer dudit premier régulateur (30) vers ledit élément réchauffeur (28) que lorsque la température dudit élément réchauffeur (28) est inférieure à une valeur prédéterminée.

2. Réchauffeur (16) selon la Revendication 1, ***caractérisé en ce que*** ledit premier thermocouple (32) est configuré pour envoyer un signal électrique indicatif de la température surveillée audit régulateur (30) et dans lequel ledit premier régulateur (30) est configuré pour accomplir un cycle régulateur proportionnel - à corrélation intégrale - à dérivation sur ledit premier thermocouple (32).

3. Réchauffeur (16) selon la Revendication 1 ou 2, ***caractérisé en ce que*** ledit second thermocouple (34) est configuré pour envoyer un signal électrique indicatif de la température surveillée au second régulateur (37) et dans lequel ledit second régulateur (37) est configuré pour accomplir un cycle régulateur proportionnel - à corrélation intégrale - à dérivation sur ledit second thermocouple (34).

4. Réchauffeur (16) selon l'une quelconque des Revendications 1 à 3, ***caractérisé en ce que*** ladite sortie (26) est configurée pour diriger le gaz réchauffé vers un moule ou un noyau de sable (20) et ledit premier thermocouple (32) est placé immédiatement adjacent audit moule ou noyau (20).

5. Réchauffeur (16) selon l'une quelconque des Revendications précédentes, ***caractérisé par*** des moyens (54) de régulation de l'écoulement destinés à réguler l'écoulement du gaz dans ladite chambre.

6. Réchauffeur (16) selon l'une quelconque des Revendications précédentes, ***caractérisé par*** un conduit de dérivation (50) destiné à ce qu'au moins une partie dudit gaz évite la chambre (22).

7. Réchauffeur (16) selon la Revendication 6, dans lequel les moyens de régulation de l'écoulement comprennent des moyens orienteurs (52) pour diriger au moins une partie dudit gaz vers ledit conduit de dérivation (50) comme et lorsque nécessaire.
